# EUROPÄISCHE PATENTSCHRIFT

(11) **EP 3 464 693 B1**
(45) Veröffentlichungstag und Bekanntmachung des Hinweises auf die Patenterteilung: **02.12.2020**
(21) Anmeldenummer: 17731471.3
(22) Anmeldetag: 24.05.2017
(51) Int. Cl.: D03D 1/00, B63H 9/06, D03D 15/10, D03D 13/00, B63H 9/067

(54) **SEGELTUCH MIT NOTLAUFEIGENSCHAFTEN**
SAILCLOTH WITH FAIL-SAFE PROPERTIES
TOILE À VOILE À PROPRIÉTÉS DE FONCTIONNEMENT EN CAS D'URGENCE

(30) Priorität: 25.05.2016 DE 102016109663
(43) Veröffentlichungstag der Anmeldung: 10.04.2019
(73) Patentinhaber: Dimension-Polyant GmbH, 47906 Kempen (DE)
(72) Erfinder: STEIN, Uwe, 52525 Heinsberg (DE); SCHILLINGS, Heiner, 52525 Heinsberg (DE)
(74) Vertreter: Schneiders & Behrendt PartmbB Rechtsanwälte - Patentanwälte
(86) Internationale Anmeldenummer: PCT/EP2017/062677
(87) Internationale Veröffentlichungsnummer: WO 2017/202996

(56) Entgegenhaltungen:
- DE-A1- 1 535 634
- US-A- 5 304 414

## Beschreibung

Die Erfindung betrifft ein Segeltuch mit Notlaufeigenschaften, das ein Gewebe aus einem ersten Fasermaterial und einem darin eingewebten zweiten Fasermaterial aufweist, sowie ein daraus gefertigtes Segel.

Segel, insbesondere Spinnaker, sind nicht nur unter Regattabedingungen erheblichen Lasten ausgesetzt. Dies führt immer wieder dazu, dass ein Segel reißt, insbesondere unter einer plötzlich auftretenden Belastung beispielsweise beim Setzen bei kräftigem Wind oder bei plötzlich einfallenden starken Windböen. Besonders gefährdet sind Segel, die bereits kleinere mechanische Beschädigungen, z. B. durch Kontakt mit scharfkantigen Teilen des Riggs, Reling, o. ä., aufweisen und/oder aufgrund des längeren Gebrauchs einem Alterungsprozess durch Salzwasser und UV-Strahlung unterworfen waren.

Eine solche Rissbildung führt in der Regel zu einem Totalverlust des Segels. Das Segel reißt nicht nur partiell, sondern über seine gesamte Länge und kann damit nicht länger für Vortrieb sorgen. Je nach Bedingungen können durch das unkontrollierte Schlagen des zerrissenen Segels gefährliche Situationen an Bord eintreten und/oder mangels Ersatzsegel/Motor die Manövrierfähigkeit eingeschränkt oder verloren gehen.

Aus der US 5,304,414 A geht ein Segeltuch hervor, das ein Gewebe mit einem ersten Fasermaterial und einem darin eingewebten zweiten Fasermaterial, wobei das zweite Fasermaterial eine regelmäßige Netzstruktur innerhalb des Gewebes ausbildet und eine höhere Reißfestigkeit und eine höhere Gleitfähigkeit als das erste Fasermaterial aufweist.

Insofern wäre es wünschenswert, über ein Segeltuch zu verfügen, aus dem ein Segel gefertigt werden kann, das über Notlaufeigenschaften verfügt, d. h. nicht vollständig aufreißt.

Aufgabe der Erfindung ist somit die Bereitstellung eines Segeltuchs, das einem Segel, auch nach längerem Gebrauch, Notlaufeigenschaften verleiht.

Diese Aufgabe wird mit einem Segeltuch der eingangs genannten Art gelöst, bei dem das zweite Fasermaterial eine regelmäßige Netzstruktur innerhalb des Gewebes ausbildet, wobei das zweite Fasermaterial eine höhere Reißfestigkeit und eine höhere Gleitfähigkeit als das erste Fasermaterial aufweist.

Das erfindungsgemäße Segeltuch besteht aus einem Gewebe, in dem zwei Fasermaterialien miteinander kombiniert sind. Es handelt sich um Fasermaterialien, die im Segelsport gebräuchlich sind, die sich aber hinsichtlich ihrer Eigenschaften so unterscheiden, dass ein vollständiges Aufreißen des Segeltuchs bzw. Segels verhindert wird.

Das zugrunde liegende Prinzip beruht darauf, dass das zweite Fasermaterial, das in das eigentliche Gewebe des Segeltuchs eingearbeitet ist, eine höhere Reißfestigkeit und eine höhere Gleitfähigkeit als das erste Fasermaterial aufweist.

Das zweite Fasermaterial ist zum einen gegenüber den auftretenden Kräften wiederständiger, d. h. es reißt nicht so leicht. Dies allein ist aber nicht ausreichend, einen Riss über das gesamte Segel zu verhindern. Die einwirkenden Kräfte müssen aufgefangen werden. Dies gelingt dadurch, dass das zweite Fasermaterial in der Lage ist, bei sehr hoher Belastung innerhalb der Gewebestruktur zu gleiten. Beim Reißen des ersten Fasermaterials zieht sich das zweite Fasermaterial partiell aus dem Gewebe heraus ohne aber seine Integrität zu verlieren und überbrückt den Riss, beispielsweise auch unter Verzwirbelung beziehungsweise Verdrillung von Fasersträngen. Auf diese Art und Weise wird die Fortpflanzung eines Risses im Segel begrenzt und ein ausreichender Rest an Funktionsfähigkeit erhalten.

Es ist dazu völlig ausreichend, dass das zweite Fasermaterial innerhalb des Gewebes eine mehr oder weniger regelmäßige Netzstruktur ausbildet, bei der die einzelnen Fasern einen Abstand zu benachbarten Fasern einhalten, der beispielsweise im Bereich von 0,5 bis 2 cm liegt.

Das erfindungsgemäße Segeltuch besteht aus einem Gewebe, das gegebenenfalls mit einem Film kaschiert werden kann, um die Winddurchlässigkeit herabzusetzen. Die Matrix dieses Segels besteht aus einem ersten Fasermaterial, das in der Regel aus einem üblichen Polyester und/oder Polyamid besteht. In dieses Gewebe aus einem ersten Fasermaterial ist eine mehr oder weniger regelmäßige Netzstruktur aus einem zweiten Fasermaterial eingewebt, dass eine höhere Festigkeit und eine bessere Gleitfähigkeit im Gewebe aufweist als das erste Fasermaterial. Als zweites Fasermaterial kommen insbesondere Fasern aus Polyester und/oder Polyolefinen in Frage.

Was die höhere Reißfestigkeit des zweiten Fasermaterials anbetrifft, kommen in erster Linie Polyolefinfasern in Frage. Insbesondere sind hier Polyethylenfasern zu nennen, wie sie beispielsweise unter der Marke Dyneema® auf dem Markt sind. Es handelt sich dabei um Fasern mit einer starken Parallelorientierung der Polyethylenketten.

Als zweites Fasermaterial kommt auch Polyester in Frage, das beispielsweise mit Polyamid kombiniert werden kann. Dabei kommt es darauf an, dass das ausgewählte Polyestermaterial eine höhere Zugfestigkeit als das Polyamidmaterial aufweist.

Neben einer hohen Reiß- bzw. Zugfestigkeit kommt es bei dem zweiten Fasermaterial auf eine verbesserte Gleitfähigkeit, verglichen mit dem ersten Fasermaterial, im Gewebe an. Dies führt bei Belastung dazu, dass sich die Fasern aus dem reißenden Gewebeverbund herausziehen und dadurch Energie absorbieren. Damit kann zwar im Gewebe aus dem ersten Fasermaterial ein Riss entstehen, jedoch wird durch die überbrückenden Fasern des zweiten Fasermaterials die Aufweitung und Ausbreitung dieses Risses verhindert. Das zweite Fasermaterial bildet quasi eine Brückenstruktur, teilweise auch unter Verzwirnung beziehungsweise Verdrillung, und stoppt damit die Ausbreitung des Risses.

Das zweite Fasermaterial ist insbesondere ein Polyethylen, das unter der Markenbezeichnung Dyneema® auf dem Markt ist, und insbesondere ein Gewicht von 110 bis 330, insbesondere etwa 220 dtex, aufweist.

Erfindungsgemäß beträgt das Gewichtsverhältnis der Fasern des ersten und zweiten Materials 1:1 bis 1:3 und liegt vorzugsweise im Bereich von 1:1,5 bis 1:2.

Zur Beeinflussung der Gleitfähigkeit der Fasermaterialien kommen gemäß der Erfindung Beschichtungen zum Einsatz. Dabei werden Fasern des ersten Fasermaterials mit einem Mittel beschichtet, das die Gleitfähigkeit herabsetzt und/oder die Fasern des zweiten Fasermaterials werden mit einem die Gleitfähigkeit erhöhenden Mittel beschichtet.

Eine Beschichtung des ersten Fasermaterials kann beispielsweise eine Polyurethanbeschichtung sein. Polyethylenfasern haben in der Regel ein höheres Gleitvermögen innerhalb eines Gewebes als Polyester- oder Polyamidfasern. Insoweit ist eine Behandlung dieses Fasermaterials zur Erhöhung der Gleitfähigkeit in der Regel nicht notwendig. Wird aber eine andere Faser als zweites Fasermaterial verwandt, etwa eine Polyesterfaser oder auch eine Polyamidfaser, kann die Gleitfähigkeit durch eine geeignete Beschichtung erhöht werden. Insbesondere kommen hier Silikon-Beschichtungen in Frage, wie sie beispielsweise von der Firma Wacker unter der Bezeichnung FINISH CT 51 L angeboten werden. Die Schichtdicke der Beschichtung auf der Faser wird in der Regel nicht mehr als maximal 1 % des Faserdurchmessers betragen, eine Schichtdicke, die noch eine ausreichende Haftung innerhalb des Gewebes gewährleistet. Im Belastungsfall werden aber die behandelten Fäden der Reißkraft durch Gleiten im Gewebe ausweichen. Der Riss wird gestoppt, wenn die Reißkraft kleiner ist als die summierten Reibungskräfte.

Im Übrigen sind aus der textilen Praxis zahlreiche Gleitmittel, häufig auch als Schmälzmittel bezeichnet, zur Behandlung von Fasern bekannt.

Zur Verminderung der Gleitfähigkeit können die Fasern des ersten Fasermaterials auch aufgeraut werden.

In der Regel können für das erste und das zweite Fasermaterial Stapelfasern und/oder Multifilamente verwandt werden. Insbesondere besteht aber das zweite Fasermaterial aus Multifilamenten, die gerade bei der Verwendung von Dyneema®-Fasern dem Material eine besonders hohe Zugfestigkeit und Reißfestigkeit verleihen.

Das erfindungsgemäße Segeltuch kann zur Erhöhung der Dichtigkeit mit einem aufkaschierten Film versehen sein. Ein solcher Film wird mit Gewebe entweder thermisch oder adhäsiv mit Klebstoff verbunden. Unter einem solchen aufkaschierten Film können auf übliche Weise Verstärkungsfilamente angeordnet sein, die entlang der im Segel üblichen Belastungslinien verlaufen.

Ein erfindungsgemäßes Segeltuch hat insbesondere ein Flächengewicht von 30 bis 200 g/m², insbesondere 60 bis 120 g/m², und ist damit besonders für großflächige Segel, beispielsweise Spinnaker geeignet.

Das zweite Fasermaterial bildet innerhalb des Segeltuchgewebes eine Netzstruktur aus, wobei sich die Fasern des zweiten Fasermaterials vorzugsweise in einem Winkel von 90° kreuzen. Dabei haben die Fasern einen relativ großen Abstand, im Vergleich zu dem Abstand der Fasern des ersten Materials, und bilden beispielsweise Quadrate oder Rechtecke mit einer Kantenlänge von 0,5 bis 2 cm. Eine größere Netzdichte ist in der Regel nicht erforderlich, da das Fasermaterial nicht für die Segeltechnischen Eigenschaften des Segeltuchs verantwortlich ist. Es dient in erster Linie der Verbesserung der Reißfestigkeit und der Sicherung von Notlaufeigenschaften.

Das erfindungsgemäße Segeltuch eignet sich für die Herstellung von Segeln, die besonderen Belastungen ausgesetzt sind. Dies ist insbesondere im Regattasport die Verwendung für die Herstellung von Spinnakern, die eine gewisse Tendenz zum Reißen haben, insbesondere beim Setzen und bei plötzlich auftretenden Böen.

## Patentansprüche

1. Segeltuch mit Notlaufeigenschaften, das ein Gewebe mit einem ersten Fasermaterial und einem darin eingewebten zweiten Fasermaterial aufweist, wobei das zweite Fasermaterial eine regelmäßige Netzstruktur innerhalb des Gewebes ausbildet, eine höhere Reißfestigkeit und eine höhere Gleitfähigkeit als das erste Fasermaterial aufweist, **dadurch gekennzeichnet, dass** das erste Fasermaterial eine Beschichtung aufweist, die die Gleitfähigkeit erniedrigt und/oder das zweite Fasermaterial eine Beschichtung aufweist, die die Gleitfähigkeit erhöht.

2. Segeltuch nach Anspruch 1, **dadurch gekennzeichnet, dass** das erste Fasermaterial aus Polyester und/oder Polyamid besteht.

3. Segeltuch nach Anspruch 1 oder 2, **dadurch gekennzeichnet, dass** das zweite Fasermaterial aus Polyester und/oder Polyolefin besteht.

4. Segeltuch nach einem der vorstehenden Ansprüche, **dadurch gekennzeichnet, dass** als erstes Fasermaterial Polyamid mit Polyester oder Polyolefin als zweitem Fasermaterial oder als erstes Fasermaterial Polyester mit Polyolefin als zweitem Fasermaterial kombiniert wird.

5. Segeltuch nach einem der vorstehenden Ansprüche, **dadurch gekennzeichnet, dass** das zweite Fasermaterial ein hochfestes Polyethylen ist.

6. Segeltuch nach Anspruch 5, **dadurch gekennzeichnet, dass** das Polyethylen eines mit einem Gewicht von 110 bis 330 dtex, ist.

7. Segeltuch nach einem der Ansprüche 1 bis 6, **dadurch gekennzeichnet, dass** das erste Fasermaterial eine Polyurethanbeschichtung aufweist und/oder das zweite Fasermaterial mit einem Silikon beschichtet ist.

8. Segeltuch nach einem der vorstehenden Ansprüche, **dadurch gekennzeichnet, dass** das erste und das zweite Fasermaterial aus Stapelfasern und/oder Multifilamenten besteht.

9. Segeltuch nach einem der Ansprüche 1 bis 7, **dadurch gekennzeichnet, dass** das zweite Fasermaterial aus Multifilamenten besteht.

10. Segeltuch nach einem der vorstehenden Ansprüche mit aufkaschiertem Film zur Erhöhung der Dichtigkeit.

11. Segeltuch nach Anspruch 10 mit entsprechend den Lastverläufen ausgerichteten Verstärkungsfilamenten.

12. Segeltuch nach einem der vorstehenden Ansprüche mit einem Flächengewicht von 30 bis 200 g/m².

13. Segeltuch nach einem der vorstehenden Ansprüche mit einer Netzstruktur, in der sich die Fasern des zweiten Fasermaterials in einem Winkel von 90° kreuzen.

14. Segeltuch nach Anspruch 13, **dadurch gekennzeichnet, dass** die Netzstruktur des zweiten Fasermaterials Quadrate oder Rechtecke mit einer Kantenlänge von 0,5 bis 2 cm ausbildet.

15. Segel, insbesondere Spinnaker, hergestellt aus einem Segeltuch eines der Ansprüche 1 bis 14.

## Claims

1. Sailcloth having emergency-operating properties, comprising a woven fabric having a first fibre material and a second fibre material woven into it, wherein the second fibre material forms a regular network structure within the woven fabric, has a higher tear resistance and a higher sliding capacity than the first fibre material, **characterised in that** the first fibre material comprises a coating that reduces the sliding capability and/or the second fibre material comprises a coating that increases the sliding capability.

2. Sailcloth according to claim 1, **characterised in that** the first fibre material consists of polyester and/or polyamide.

3. Sailcloth according to claim 1 or 2, **characterised in that** the second fibre material consists of polyester and/or polyolefin.

4. Sailcloth according to any of the preceding claims, **characterised in that** polyamide, as the first fibre material, is combined with polyester or polyolefin as the second fibre material, or polyester, as the first fibre material, is combined with polyolefin as the second fibre material.

5. Sailcloth according to any of the preceding claims, **characterised in that** the second fibre material is a high-strength polyethylene.

6. Sailcloth according to claim 5, **characterised in that** the polyethylene is one having a weight of from 110 to 330 dtex.

7. Sailcloth according to any of claims 1 to 6, **characterised in that** the first fibre material comprises a polyurethane coating and/or the second fibre material is coated with a silicone.

8. Sailcloth according to any of the preceding claims, **characterised in that** the first and the second fibre material consists of staple fibres and/or multifilaments.

9. Sailcloth according to any of claims 1 to 7, **characterised in that** the second fibre material consists of multifilaments.

10. Sailcloth according to any of the preceding claims, comprising laminated film to increase the impermeability.

11. Sailcloth according to claim 10, comprising reinforcing filaments aligned in accordance with the load profiles.

12. Sailcloth according to any of the preceding claims, having a weight per unit area of between 30 and 200 g/m².

13. Sailcloth according to any of the preceding claims, having a network structure in which the fibres of the second fibre material intersect at an angle of 90°.

14. Sailcloth according to claim 13, **characterised in that** the network structure of the second fibre material forms squares or rectangles having an edge length of from 0.5 to 2 cm.

15. Sail, in particular a spinnaker, produced from a sailcloth according to any of claims 1 to 14.

## Revendications

1. Toile pour voiles avec des propriétés de fonctionnement en cas d'urgence, qui présente un tissu avec un premier matériau fibreux et un deuxième matériau fibreux tissé dans celui-ci, dans laquelle le deuxième matériau fibreux réalise une structure de filet régulière à l'intérieur du tissu, présente une résistance à la déchirure plus élevée et une capacité de glissement plus élevée que le premier matériau fibreux, **caractérisée en ce que** le premier matériau fibreux présente un revêtement, qui diminue la capacité de glissement et/ou le deuxième matériau fibreux présente un revêtement, qui augmente la capacité de glissement.

2. Toile pour voiles selon la revendication 1, **caractérisée en ce que** le premier matériau fibreux est constitué de polyester et/ou de polyamide.

3. Toile pour voiles selon la revendication 1 ou 2, **caractérisée en ce que** le deuxième matériau fibreux est constitué de polyester et/ou de polyoléfine.

4. Toile pour voiles selon l'une quelconque des revendications précédentes, **caractérisée en ce qu'**est combiné en tant que premier matériau fibreux du polyamide à du polyester ou à de la polyoléfine en tant que deuxième matériau fibreux ou en tant que premier matériau fibreux du polyester à de la polyoléfine en tant que deuxième matériau fibreux.

5. Voile pour toiles selon l'une quelconque des revendications précédentes, **caractérisée en ce que** le deuxième matériau fibreux est un polyéthylène hautement résistant.

6. Voile pour toiles selon la revendication 5, **caractérisée en ce que** le polyéthylène est un polyéthylène avec un poids de 110 à 330 dtex.

7. Voile pour toiles selon l'une quelconque des revendications 1 à 6, **caractérisée en ce que** le premier matériau fibreux présente un revêtement en polyuréthane et/ou le deuxième matériau fibreux est revêtu d'un silicone.

8. Voile pour toiles selon l'une quelconque des revendications précédentes, **caractérisée en ce que** le premier et le deuxième matériau fibreux sont constitués de fibres discontinues et/ou de multifilaments.

9. Voile pour toiles selon l'une quelconque des revendications 1 à 7, **caractérisée en ce que** le deuxième matériau fibreux est constitué de multifilaments.

10. Voile pour toiles selon l'une quelconque des revendications précédentes avec un film contrecollé servant à augmenter l'étanchéité.

11. Voile pour toiles selon la revendication 10 avec des filaments de renforcement orientés conformément aux profils de charge.

12. Voile pour toiles selon l'une quelconque des revendications précédentes avec un poids surfacique de 30 à 200 g/m².

13. Voile pour toiles selon l'une quelconque des revendications précédentes, avec une structure de filet, dans laquelle les fibres du deuxième matériau fibreux se croisent selon un angle de 90°.

14. Voile pour toiles selon la revendication 13, **caractérisée en ce que** la structure de filet du deuxième matériau fibreux réalise des carrés ou des rectangles avec une longueur d'arête de 0,5 à 2 cm.

15. Voile, en particulier spinnaker, fabriquée à partir d'une toile pour voiles selon l'une quelconque des revendications 1 à 14.
